# EUROPEAN PATENT APPLICATION

(11) **EP 2 439 561 A1**
(43) Date of publication of application: **11.04.2012**
(21) Application number: 10783471.5
(22) Date of filing: 04.06.2010
(51) Int. Cl.: G01V 3/12, G01S 7/03, G01S 13/89

(54) **MILLIMETER WAVE IMAGING DEVICE AND PROGRAM**

(30) Priority: 05.06.2009 JP 2009136439
(71) Applicant: Masprodenkoh Kabushikikaisha, Nisshin-shi, Aichi 470-0194 (JP); Chuo Electronics Co., Ltd., Hachioji-shi, Tokyo 192-0051 (JP); Tohoku University, Aoba-ku Sendai-shi Miyagi 980-8577 (JP)
(72) Inventor: UEMURA, Jun, Nisshin-shi Aichi 470-0194 (JP); TAKEDA, Masamune, Nisshin-shi Aichi 470-0194 (JP); YAMADA, Kota, Nisshin-shi Aichi 470-0194 (JP); TAKAHASHI, Junichi, Nisshin-shi Aichi 470-0194 (JP); HASEGAWA, Tsuyoshi, Hachioji-shi Tokyo 192-0051 (JP); HIRAI, Haruyuki, Hachioji-shi Tokyo 192-0051 (JP); NIIKURA, Hirotaka, Hachioji-shi Tokyo 192-0051 (JP); MATSUZAKI, Tomohiko, Hachioji-shi Tokyo 192-0051 (JP); SATO, Hiroyasu, Sendai-shi Miyagi 980-8577 (JP); SAWAYA, Kunio, Sendai-shi Miyagi 980-8577 (JP); MIZUNO, Koji, Sendai-shi Miyagi 980-8577 (JP)
(74) Representative: Roth, Klaus
(86) International application number: PCT/JP2010/059559
(87) International publication number: WO 2010/140689

(57) **Abstract**

There is provided a millimeter wave imaging apparatus including: a lens antenna forming a subject image based on the millimeter waves from a subject; a line sensor including a plurality of millimeter wave sensors and capturing an image for one line of a predetermined width of the whole subject; a reflector having a reflecting surface reflecting millimeter waves; a reflection angle change device changing an angle of the reflecting surface; an image generation device generating an image of the whole subject from the respective subject images for one line; a millimeter wave radiation unit radiating a reference millimeter wave; a correction value setting device setting correction values with respect to the detected values by the millimeter wave sensors based on the millimeter wave from the millimeter wave radiation unit; and a detected value correction device correcting the detected values by the millimeter wave sensors with the correction values.

## Description

### TECHNICAL FIELD

The invention relates to a millimeter wave imaging apparatus that receives millimeter waves radiated from a subject thereby to image the subject.

### BACKGROUND ART

Conventionally, in a millimeter wave imaging apparatus, it has been proposed to receive millimeter waves radiated from a subject such as a human body thereby to generate a subject image from the received millimeter waves and detect a metallic or non-metallic weapon or smuggled goods hidden in the subject through visual inspection or image recognition based on the subject image (see Patent Documents 1 and 2).

### PRIOR ART DOCUMENTS

### PATENT DOCUMENTS

Patent Document 1: Japanese Unexamined Patent Application Publication No. 2006-288496
Patent Document 2: Japanese Patent Publication No. 2788519

### SUMMARY OF THE INVENTION

### PROBLEMS TO BE SOLVED BY THE INVENTION

By the way, as in a conventional manner, there is a concern that in a millimeter wave imaging apparatus which uses a line sensor including a plurality of millimeter wave sensors to generate a captured image of a subject, there is variation in properties of each of the millimeter wave sensors. For example, there is a possibility that a clear image cannot be obtained due to variation in properties of each of the millimeter wave sensors. As a result, accuracy in detecting an inspection target object from the captured image may be deteriorated.

More specifically, the millimeter wave sensor includes a millimeter wave antenna and signal processing circuits (an amplifier circuit, a filter circuit, a wave detector circuit, etc.) which process the received signals from the millimeter wave antenna. Accordingly, there may be caused variation in outputs from each of the millimeter wave sensors due to properties inherent to these millimeter wave antenna and signal processing circuits. The variation causes the finally obtained image to become unclear, and thus detection accuracy of the inspection target object deteriorates.

The invention, which has been made in view of such problem, has an objective to provide a technology for preventing the captured image from being unclear due to variation in properties of each of the millimeter wave sensors in the millimeter wave imaging apparatus which images the subject using the plurality of millimeter wave sensors.

### MEANS FOR SOLVING THE PROBLEMS

A millimeter wave imaging apparatus according to a first aspect of the invention made to solve the above problem includes:
a lens antenna that captures millimeter waves radiated from a subject thereby to form a subject image;
a line sensor configured such that a plurality of millimeter wave sensors are aligned in a line in an image forming region where the millimeter waves captured by the lens antenna form the subject image, the line sensor capturing a subject image for one line which is a part of a whole subject, by millimeter waves received by each of the millimeter wave sensors;
a reflector having a reflecting surface that reflects the millimeter waves captured by the lens antenna thereby to guide the reflected millimeter waves to the line sensor;
a reflection angle change device that, in order to displace the image forming region of the subject image by the millimeter waves reflected by the reflecting surface of the reflector, along a crossing direction with a direction where the millimeter wave sensors are placed, changes an angle of the reflecting surface thereby to sequentially change a reflection angle of the millimeter waves by the reflecting surface, so that the line sensor sequentially captures the subject images for one line;
an image generation device that generates, as an image of the whole subject, an image including the respective subject images for one line sequentially captured by the line sensor; and
a millimeter wave radiation unit which is placed outside a path where the millimeter waves captured by the lens antenna reach the reflecting surface of the reflector from the lens antenna, and radiates a reference millimeter wave used as a reference, from a position where the millimeter wave radiation unit is located, toward the reflector,
wherein the reflection angle change device proceeds to a preparatory stage in which the reflection angle is changed until the image forming region of the subject image by the millimeter waves captured by the lens antenna does not overlap the region where the millimeter wave sensors are located and a region of an image formed by the millimeter wave radiated from the millimeter wave radiation unit overlaps the region where the millimeter wave sensors are located, prior to capturing of the subject image by the line sensor, and then proceeds to an imaging stage in which the reflection angle by the reflecting surface is sequentially changed in order to displace the image forming region, so that the line sensor sequentially captures the subject images for one line,
the millimeter wave imaging apparatus further including:
   a correction value setting device that, in the preparatory stage, determines, as a reference detected value, an average value based on all of detected values detected by the respective millimeter wave sensors, or one of the detected values, and then sets, as correction values with respect to the each of the millimeter wave sensors, errors between each of the detected values detected by the respective millimeter wave sensors and the reference detected value; and
   a detected value correction device that, in the imaging stage, each time the subject image for one line is captured by the line sensor, corrects the detected values which constitute the corresponding subject image and which are detected by the respective millimeter wave sensors, with the correction values, each of which is set by the correction value setting device as a correction value with respect to the corresponding millimeter wave sensor.

In a second aspect of the invention, the "millimeter wave radiation unit" described above may include a wave absorber, or a thermal noise source which generates thermal noise used as a reference.
Furthermore, in order to solve the above problem, the invention according to a third aspect may be a program which allows a computer to execute a variety of processing procedures so as to function as all the devices according to the first and second aspects. In other words, the invention according to the third aspect may be a program which allows a computer to function as the reflection angle change device, the image generation device, the correction value setting device, and the detected value correction device.

The program described above is a group of instructions in which instructions suitable for computer processing are sequentially arranged. The program is provided to the millimeter wave imaging apparatus through various types of recording media or communication lines. Alternatively, the above program may be provided to a user or the like who utilizes the millimeter wave imaging apparatus, through various types of recording media or communication lines.

### EFFECTS OF THE INVENTION

In the millimeter wave imaging apparatus described above, the preparatory stage, in which the millimeter wave from the millimeter wave radiation unit is received, is proceeded, prior to the imaging stage in which capturing of a subject image is performed by the line sensor. The millimeter wave radiation unit radiates a reference millimeter wave used as a reference. Then, the process proceeds to the imaging stage in which the subject image is actually captured.

In the preparatory stage, the correction values are set with respect to the detected values from the respective millimeter wave sensors, based on the reference millimeter wave, used as a reference, from the millimeter wave radiation unit. Once the capturing of the subject image is started in the imaging stage, when the subject image is captured, the detected value detected by each of the millimeter wave sensors is corrected with the correction value which has been set corresponding to each of the detected values in the preparatory stage.

Therefore, even if there is variation in properties of each of the millimeter wave sensors, the detected value of each of the millimeter wave sensors is corrected with the correction value based on the reference millimeter wave used as a reference. Thus, the final output values are less influenced by the variation. For this reason, the captured image can be inhibited from becoming unclear due to the variation in properties of the millimeter wave sensors.

### BRIEF DESCRIPTION OF THE DRAWINGS

Fig. 1 is a block diagram showing an overall configuration of a millimeter wave imaging apparatus.
Fig. 2 is a block diagram showing a configuration of a millimeter wave sensor constituting a line sensor.
Fig. 3 is a flowchart showing an imaging process.
Fig. 4 is a diagram showing that a millimeter wave radiated from a millimeter wave radiation unit is reflected by a reflector.

### DESCRIPTION OF REFERENCE NUMERALS

1...millimeter wave imaging apparatus, 10...lens antenna, 20...line sensor, 22...millimeter wave sensor, 30...reflector, 32...reflecting surface, 34...displacement mechanism, 40...millimeter wave radiation unit, 50...controller, 102...receiving antenna, 104...Low Noise Amplifier, 108...wave detector circuit.

### MODE FOR CARRYING OUT THE INVENTION

An embodiment of the invention will be described below with reference to the drawings.

### (1) Overall Configuration

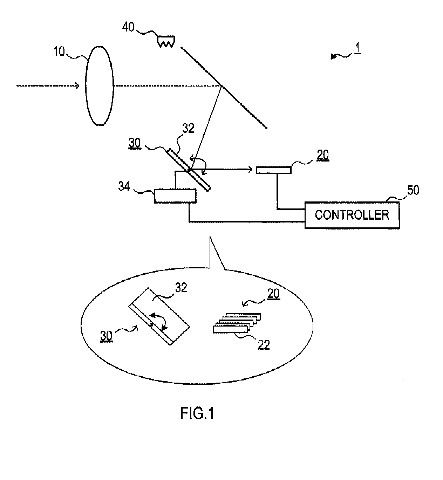

A millimeter wave imaging apparatus 1 includes, as shown in Fig. 1, a lens antenna 10, a line sensor 20, a reflector 30, a millimeter wave radiation unit 40, and a controller 50. The lens antenna 10 captures millimeter waves radiated from a subject and forms a subject image. The line sensor 20 is configured such that a plurality of millimeter wave sensors 22 are aligned in a line. The reflector 30 has a reflecting surface 32 which reflects the millimeter waves captured by the lens antenna 10 and guides the reflected millimeter waves to the line sensor 20. The millimeter wave radiation unit 40 is placed outside a path in which the millimeter waves captured by the lens antenna 10 reach the reflecting surface 32 of the reflector 30. The controller 50 controls operation of the whole millimeter wave imaging apparatus 1.

The line sensor 20 is configured such that a plurality of millimeter wave sensors 22 are aligned in a line in an image forming region where the millimeter waves captured by the lens antenna 10 form the subject image. Then, the line sensor 20 captures the subject image based on the millimeter waves received by each of the millimeter wave sensors 22. More specifically, the line sensor 20 captures a divided subject image for one line in multiple times (an image of a region for one line is sequentially captured in multiple times thereby to capture an image of the whole subject).

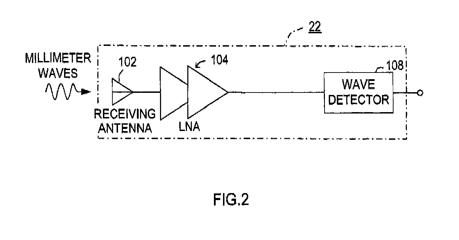

Each of the millimeter wave sensors 22 includes, as shown in Fig. 2, a receiving antenna 102, a Low Noise Amplifier (LNA) 104 and a wave detector 108. The receiving antenna 102 is an antenna for receiving millimeter waves. The LNA 104 amplifies received signals from the receiving antenna 102. The wave detector 108 detects the received signals amplified by the LNA 104 and subsequently signal levels of the signals. Accordingly, detected values corresponding to the signal levels of the millimeter waves received at each receiving point are acquired from each of the millimeter wave sensors 22. The detected values from each of the millimeter wave sensors 22 are sequentially inputted into the controller 50 (see Fig. 1), so that the controller 50 generates image data.

As shown in Fig. 1, the reflector 30 includes a displacement mechanism 34 for displacing a reflection angle of millimeter waves by the reflecting surface 32, along a crossing direction with a direction in which the millimeter wave sensors 22 are disposed.

The millimeter wave radiation unit 40 is disposed outside a path where the millimeter waves captured by the lens antenna 10 reach the reflecting surface 32 of the reflector 30, and radiates a reference millimeter wave used as a reference toward the reflector 30 from a position of the millimeter wave radiation unit 40 located as described above. In the present embodiment, the millimeter wave radiation unit 40 includes a wave absorber, or a thermal noise source which generates thermal noise used as a reference.

### (2) Imaging Process by Controller 50

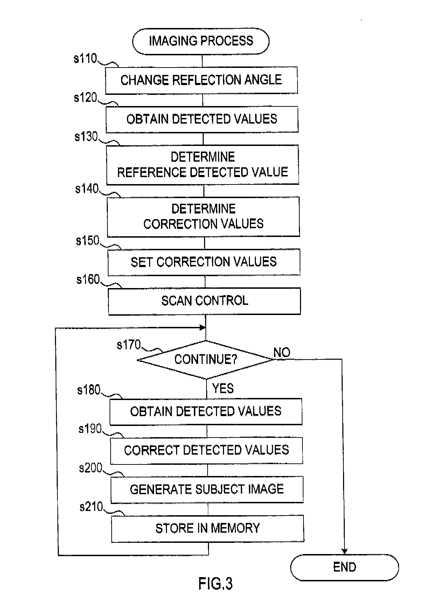

A processing procedure of imaging process executed by the controller 50 in accordance with a program stored in a memory included in the controller 50 will be described below with reference to Fig. 3.

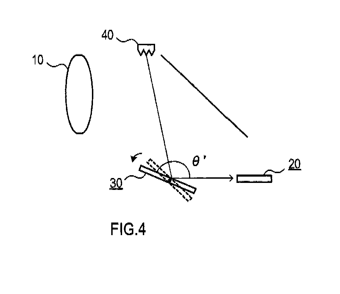

In this imaging process, firstly, the reflection angle by the reflecting surface 32 of the reflector 30 is changed until a region of an image formed by the millimeter wave radiated from the millimeter wave radiation unit 40 overlaps a region where the millimeter wave sensors 22 are located (s110). Here, the displacement mechanism 34 of the reflector 30 is instructed to displace the reflection angle of the millimeter waves by the reflecting surface 32 to a predetermined evacuation angle θ'. The instructed displacement mechanism 34 changes an angle of the reflecting surface 32 until the region of an image formed by the millimeter wave radiated from the millimeter wave radiation unit 40 overlaps the region where the millimeter wave sensors 22 are located, thereby to change the reflection angle of the millimeter wave by the reflecting surface 32 to the evacuation angle θ' (see Fig. 4).

Since the millimeter wave radiation unit 40 is disposed outside a path in which the millimeter waves captured by the lens antenna 10 reach the reflecting surface 32 of the reflector 30, when the reflection angle is changed in the processing of s110, the image forming region of the subject image by the millimeter waves from the subject captured by the lens antenna 10 does not overlap the region where the millimeter wave sensors 22 are located.

Next, when the reflection angle is changed to the evacuation angle in the processing of s110, each of the detected values by each of the millimeter wave sensors 22 constituting the line sensor 20 is obtained (s120).

Here, the detected values are obtained as a result of the fact that the millimeter wave radiated from the millimeter wave radiation unit 40 is received. In the case where the millimeter wave radiation unit 40 includes a wave absorber, the millimeter wave radiation unit 40 emits a millimeter wave having an extremely low radiant quantity, and detected values near "0" are obtained.

Next, based on at least one of the detected values obtained in the processing of s120, a reference detected value, which is used as a reference in calculating errors with respect to each of the detected values, is determined (s130). Here, an average value based on all the detected values obtained in the processing of s120, or one of the obtained detected values (a maximum value or a minimum value) is determined as the reference detected value.

Next, based on the reference detected value determined in the processing of s130, correction values for correcting the detected values by each of the millimeter wave sensors 22 are determined (s140). Here, errors between the detected values detected by each of the millimeter wave sensors 22 and the reference detected value determined in the processing of s130 are calculated. The errors are determined as the correction values of the corresponding millimeter wave sensor 22.

Next, each of the correction values determined in the processing of s140 is set as a correction value with respect to the detected value of the corresponding millimeter wave sensor 22 (s150). The stage until the correction values are set in accordance with the imaging processing (for example, the stage from s110 to s150) corresponds to an example of a preparatory stage according to the invention.

Next, scan control is started (s160). Scan control is a control in which the reflection angle made by the reflecting surface 32 of the reflector 30 is repeatedly and continuously changed within an angle range θ" which is less than the evacuation angle θ'. Here, the displacement mechanism 34 of the reflector 30 is instructed to continuously change the reflection angle of the millimeter waves by the reflecting surface 32. The instructed displacement mechanism 34 controls changing of the angle of the reflecting surface 32 thereby to continuously and repeatedly change the reflection angle of the millimeter waves by the reflecting surface 32 within the predetermined angle range θ". Accordingly, scanning of an imaging region by the line sensor 20 is performed.

A value of the angle range θ" is previously set so that the image forming region of the subject image by the millimeter waves captured by the lens antenna 10 overlaps the region where the millimeter wave sensors 22 are located.

Next, determination is made concerning whether or not imaging of the subject image should be continued (s170). For example, if operation for terminating imaging is performed with respect to the millimeter wave imaging apparatus 1, determination is made that imaging should be terminated (s170: NO). In other words, determination is made that imaging should not be continued.

When determination is made in the processing of s170 that imaging should be continued (s170: YES), each of the detected values by the millimeter wave sensors 22 of the line sensor 20 is obtained (s180).
Next, each of the detected values obtained in the processing of s180 is corrected based on the correction value set with respect to the corresponding millimeter wave sensor 22 (s190).

Next, based on each of the detected values after correction, which have been corrected in the processing of s190, the subject image for one line is generated (s200). The generated subject image for one line is stored in a memory (s210). More specifically, the subject image for one line generated in the processing of s200 is determined as an image of a given line which is determined in relation to the reflection angle produced by the reflector 30 at the time of generation, among a plurality of lines constituting the whole subject image. The subject image determined as the image of a given line is stored in a storage area corresponding to the given line, in the memory which stores the subject image.

After the processing of s210 has been performed, the process proceeds to the processing of s170. Thereafter, as long as determination is made that imaging should be continued, the processing from s170 through s210 is repeated. Thus, a stage in which the processing from s170 through s210 is repeated is an example of an imaging stage according to the invention.

Then, when determination is made in the processing of s170 that imaging should be terminated (s170: NO), the imaging process terminates.

### (3) Operation and Effects

In the millimeter wave imaging apparatus 1 configured as above, the preparatory stage, in which the millimeter wave is received from the millimeter wave radiation unit 40 radiating the reference millimeter wave used as a reference (s110 through s150 in Fig. 3), is proceeded, prior to the imaging stage in which capturing of the subject image is performed by the line sensor 20. Then, the process proceeds to the imaging stage in which the subject image is actually captured (s170 and thereafter in Fig. 3).

In the preparatory stage, the correction values are set with respect to the detected values of each of the millimeter wave sensors 22, based on the millimeter wave from the millimeter wave radiation unit 40 (s150 in Fig. 3). Once the capturing of the subject image is started in the imaging stage, when the subject image is captured, the detected values detected by the millimeter wave sensors 22 are corrected with the correction values each of which has been set corresponding to each of the detected values in the preparatory stage (s190 in Fig. 3).

Therefore, even if there is variation in properties of each of the millimeter wave sensors, the detected values of each of the millimeter wave sensors are corrected with the correction values based on the reference millimeter wave used as a reference. Thus, the final output values are less influenced by the variation. For this reason, the captured image can be inhibited from becoming unclear due to the variation in properties of the millimeter wave sensors.

### (4) Correspondence Relation to the invention

In the embodiment described above, the processings of s110 and s160 in Fig. 3 are an example of the reflection angle change device according to the invention, the processing of s200 in Fig. 3 is an example of the image generation device according to the invention, the processings of s130 through s150 in Fig. 3 are an example of the correction value setting device according to the invention, and the processing of s190 in Fig. 3 is an example of the detected value correction device according to the invention.

## Claims

1. A millimeter wave imaging apparatus comprising:
a lens antenna that captures millimeter waves radiated from a subject thereby to form a subject image;
a line sensor configured such that a plurality of millimeter wave sensors are aligned in a line in an image forming region where the millimeter waves captured by the lens antenna form the subject image, the line sensor capturing a subject image for one line which is a unit of a whole subject, by millimeter waves received by each of the millimeter wave sensors;
a reflector having a reflecting surface that reflects the millimeter waves captured by the lens antenna thereby to guide the reflected millimeter waves to the line sensor;
a reflection angle change device that, in order to displace the image forming region of the subject image by the millimeter waves reflected by the reflecting surface of the reflector, along a crossing direction with a direction where the millimeter wave sensors are disposed, changes an angle of the reflecting surface thereby to sequentially change a reflection angle of the millimeter waves by the reflecting surface, so that the line sensor sequentially captures the subject images for one line;
an image generation device that generates, as an image of the whole subject, an image including the respective subject images for one line sequentially captured by the line sensor; and
a millimeter wave radiation unit which is disposed outside a path where the millimeter waves captured by the lens antenna reach the reflecting surface of the reflector from the lens antenna, and radiates a reference millimeter wave used as a reference, from a position where the millimeter wave radiation unit is located, toward the reflector,
wherein the reflection angle change device proceeds to a preparatory stage in which the reflection angle is changed until the image forming region of the subject image by the millimeter waves captured by the lens antenna does not overlap the region where the millimeter wave sensors are located and a region of an image formed by the millimeter wave radiated from the millimeter wave radiation unit overlaps the region where the millimeter wave sensors are located, prior to capturing of the subject image by the line sensor, and then proceeds to an imaging stage in which the reflection angle by the reflecting surface is sequentially changed in order to displace the image forming region, so that the line sensor sequentially captures the subject images for one line,
the millimeter wave imaging apparatus further comprising:
a correction value setting device that, in the preparatory stage, determines, as a reference detected value, an average value based on all of detected values detected by the respective millimeter wave sensors, or one of the detected values, and then sets, as correction values with respect to each of the millimeter wave sensors, errors between each of the detected values detected by the respective millimeter wave sensors and the reference detected value; and
a detected value correction device that, in the imaging stage, each time the subject image for one line is captured by the line sensor, corrects the detected values which constitute the corresponding subject image and which are detected by the respective millimeter wave sensors, with the correction values, each of which is set by the correction value setting device as a correction value with respect to the corresponding millimeter wave sensor.

2. The millimeter wave imaging apparatus according to claim 1,
wherein the millimeter wave radiation unit comprises a wave absorber, or a thermal noise source which generates thermal noise used as a reference.

3. A program which is used with a system comprising:
a lens antenna that captures millimeter waves radiated from a subject thereby to form a subject image;
a line sensor configured such that a plurality of millimeter wave sensors are aligned in a line in an image forming region where the millimeter waves captured by the lens antenna form the subject image, the line sensor capturing a subject image for one line which is a part of a whole subject, by millimeter waves received by each of the millimeter wave sensors;
a reflector having a reflecting surface that reflects the millimeter waves captured by the lens antenna thereby to guide the reflected millimeter waves to the line sensor;
a reflection angle change device that, in order to displace the image forming region of the subject image by the millimeter waves reflected by the reflecting surface of the reflector, along a crossing direction with a direction where the millimeter wave sensors are disposed, changes an angle of the reflecting surface thereby to sequentially change a reflection angle of the millimeter waves by the reflecting surface, so that the line sensor sequentially captures the subject images for one line;
an image generation device that generates, as an image of the whole subject, an image including the respective subject images for one line sequentially captured by the line sensor; and
a millimeter wave radiation unit which is disposed outside a path where the millimeter waves captured by the lens antenna reach the reflecting surface of the reflector from the lens antenna, and radiates a reference millimeter wave used as a reference, from a position where the millimeter wave radiation unit is located, toward the reflector,
wherein the reflection angle change device proceeds to a preparatory stage in which the reflection angle is changed until the image forming region of the subject image by the millimeter waves captured by the lens antenna does not overlap the region where the millimeter wave sensors are located and a region of an image formed by the millimeter wave radiated from the millimeter wave radiation unit overlaps the region where the millimeter wave sensors are located, prior to capturing of the subject image by the line sensor, and then proceeds to an imaging stage in which the reflection angle by the reflecting surface is sequentially changed in order to displace the image forming region, so that the line sensor sequentially captures the subject images for one line,
the system further comprising:
a correction value setting device that, in the preparatory stage, determines, as a reference detected value, an average value based on all of detected values detected by the respective millimeter wave sensors, or one of the detected values, and then sets, as correction values with respect to each of the millimeter wave sensors, errors between each of the detected values detected by the respective millimeter wave sensors and the reference detected value; and
a detected value correction device that, in the imaging stage, each time the subject image for one line is captured by the line sensor, corrects the detected values which constitute the corresponding subject image and which are detected by the respective millimeter wave sensors, with the correction values, each of which is set by the correction value setting device as a correction value with respect to the corresponding millimeter wave sensor,
the program allowing a computer to function as the reflection angle change device, the image generation device, the correction value setting device and the detected value correction device.
